# EUROPÄISCHE PATENTSCHRIFT

(11) **EP 1 642 837 B1**
(45) Veröffentlichungstag und Bekanntmachung des Hinweises auf die Patenterteilung: **11.11.2009**
(21) Anmeldenummer: 05019318.4
(22) Anmeldetag: 06.09.2005
(51) Int. Cl.: B65D 19/44

(54) **Vorrichtung zur Positionierung für eine Palette**
Locating device for a pallet
Dispositif de positionnement pour des palettes

(30) Priorität: 27.09.2004 DE 102004047134
(43) Veröffentlichungstag der Anmeldung: 05.04.2006
(73) Patentinhaber: Anton Hurtz GmbH & Co. KG, D-41334 Nettetal (DE)
(72) Erfinder: Lefering, Wolfgang, 41516 Grevenbroich (DE); Römgens, Christian, 41379 Brüggen (DE)
(74) Vertreter: Draudt, Axel Hermann Christian

(56) Entgegenhaltungen:
- EP-A- 0 318 960
- DE-A1- 4 417 857
- US-A- 5 425 608

## Beschreibung

Die Erfindung betrifft eine Vorrichtung für eine Palette zur Lagerung zylinderförmiger Güter auf der Palette, wobei sie einen langgestreckten Körper aufweist, der an einer Seite mindestens zwei Vorsprünge hat, die mit entsprechenden Querbalken der Palette in Kontakt bringbar sind.

Es ist bekannt, für den Transport zylinderförmiger Güter, beispielsweise Coils oder Rollen, Paletten zu verwenden, die eine in etwa V-förmige Aufnahme für einen liegenden Transport dieser zylinderförmigen Güter zur Verfügung stellt. So gibt es z.B. Holzpaletten, auf denen Keile aufgenagelt sind. Auch ist es möglich, den Boden bzw. die Querbalken von aus Metall bestehenden Paletten mit derartigen Keilen zu versehen. Diese Keile sind dann entweder angeschraubt oder angeschweißt.

Aus der EP 0 318 960 A1 ist ein palettenartiger Container bekannt, der die Merkmale des Oberbegriffs des Anspruchs 1 offenbart. Es ist offensichtlich, dass dieser Transportcontainer keine handelsübliche Palette ist, sondern ausschließlich für den Transport zylinderförmiger Körper Verwendung findet.

Diese oben beschriebenen Paletten müssen allerdings mühsam für den Transport zylinderförmiger Güter hergerichtet werden. Außerdem können sie, wenn überhaupt, nur unter großem Arbeitsaufwand wieder für einen normalen Transport umgerüstet werden.

Der Erfindung liegt daher die Aufgabe zugrunde, eine Vorrichtung der eingangs genannten Art anzugeben, die es mit technisch einfachen Mitteln ermöglicht, eine ansonsten handelsübliche Palette für den Transport zylinderförmiger Güter rasch umzurüsten, wobei gleichzeitig auch noch eine Anpassung an die unterschiedlichen Durchmesser dieser zylinderförmigen Güter gewährleistet sein soll.

Diese Aufgabe wird bei einer Vorrichtung der eingangs genannten Art erfindungsgemäß dadurch gelöst, dass die Vorsprünge mittels einer Dreh- und/oder Schwenkbewegung mit den entsprechenden Querbalken in einen klemmenden Kontakt bringbar sind, und dass die Vorsprünge L-förmig ausgebildet sind, die jeweiligen langen Schenkel an dem Körper mit ihrer Längserstreckung quer zur Längsachse des Körpers verlaufend befestigt sind und dass die kurzen Schenkel einander entgegengesetzt orientiert sind.

Der Kern der Erfindung besteht darin, dass die Vorrichtung durch eine einfache Dreh- und/oder Schwenkbewegung mit ihren Vorsprüngen mit den Querbalken der Palette in einen klemmenden Eingriff bringbar ist. Dies kann nicht nur ohne Werkzeugbenutzung durchgeführt werden, sondern zudem auch noch äußerst rasch und vor allen Dingen an den gewünschten Orten auf der Palette. Eine Weiterbildung der Erfindung sieht vor, dass der Körper einen dreieckförmigen oder trapezförmigen Querschnitt aufweist. Da diese genannten Querschnitte bei entsprechender Orientierung eine Seite aufweisen, die einen Schenkel des V-förmigen Querschnitts bereitstellen ist auf einfache Art und Weise der lagestabile Transport zylinderförmiger Güter sichergestellt.

Aus Festigkeitsgründen, aber auch für eine einfache Herstellung sind die Vorsprünge L-förmig ausgebildet, die jeweiligen langen Schenkel an dem Körper mit ihrer Längserstreckung quer zur Längsachse des Körpers verlaufend befestigt und die kurzen Schenkel einander entgegengesetzt orientiert. Dadurch ist eine sichere Kraftübertragung zwischen Vorsprung und Querbalken sichergestellt. Aufgrund der einander entgegengesetzt orientierten kurzen Schenkel, können die Vorsprünge in den Zwischenraum zwischen zwei Querbalken durch einfache Bewegungen klemmend eingebracht werden.

Damit die Vorrichtung ein möglichst geringes Gewicht aufweist und somit auch geringe Materialkosten verursacht, ist es vorteilhaft, wenn der Körper ein Hohlkörper ist.

Es gibt viele Möglichkeiten, die Vorsprünge an den Körper zu befestigen. Eine besonders feste Verbindung ist aber dann gegeben, wenn die Vorsprünge am Körper angeschweißt sind.

Wenn die Paletten Querbalken mit trapezförmigem Querschnitt aufweisen, ist es besonders vorteilhaft, wenn die Stirnseiten der kurzen Schenkel derart abgeschrägt sind, daß sie mit den entsprechenden Schrägen der Querbalken mit trapezförmigen Querschnitt nach Art des sogenannten Doppelslope-Profils in Kontakt bringbar sind. Durch diese doppelseitige, konische Verspannung ist es nicht mehr möglich, die Vorrichtung auf der Palette zu verschieben.

Damit die Palette gefahrlos beispielsweise mittels Gabelstaplern transportiert werden kann, ist es vorteilhaft, wenn die Vorsprünge derartig angeordnet und dimensioniert sind, daß sie im Betriebszustand mit der Bodenunterfläche höchstens fluchten.

Des weiteren ist es von Vorteil, wenn die Vorrichtung aus Metall, Kunststoff oder Holz oder einer beliebigen Kombination daraus besteht.

Die Erfindung bezieht sich aber auch auf eine Palette mit mindestens zwei Vorrichtungen nach den oben genannten Ansprüchen.

Dabei ist es vorgesehen, daß sie aus Metall, Kunststoff oder Holz oder einer beliebigen Kombination daraus besteht.

Insbesondere bezieht sich die Erfindung aber auch auf eine Palette, die Querbalken mit einem trapezförmigen Querschnitt nach der Art des sogenannten Doppelslope-Profils aufweist.

Weiterhin ist es vorteilhaft, wenn die Palette für sogenannte GMP-Bereiche oder Reinräume ausgelegt ist.

Weitere Merkmale und Vorteile der Erfindung ergeben sich aus der folgenden Beschreibung mehrerer Ausführungsbeispiele sowie aus den Figuren, auf die Bezug genommen wird.

Es zeigen:
- Figur 1:: eine teilweise geschnittene Querschnittansicht der Vorrichtung;
- Figur 2:: eine teilweise geschnittene Querschnittansicht der in einer Palette eingesetzten Vorrichtung gemäß Figur 1;
- Figur 3:: eine Draufsicht auf die Anordnung gemäß Figur 2;
- Figur 4a und b:: eine der Figur 2 ähnliche Ansicht mit gekippter Vorrichtung, die in Figur 4b in teilweise geschnittenem Querschnitt dargestellt ist;
- Figur 5:: eine Draufsicht auf die Anordnung gemäß Figur 4a; und
- Figur 6:: eine Draufsicht auf eine Palette mit einer schräg zu den Querbalken angeordneten Vorrichtung kurz vor dem Eingriff bzw. kurz nach dem Eingriff mit den Querbalken.

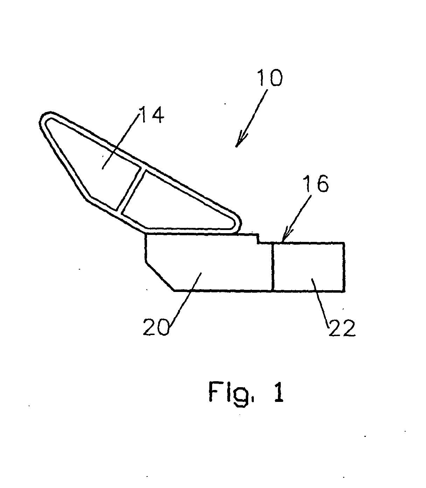

Anhand der Figuren 1 bis 6 werden nunmehr mehrere Ausführungsbeispiele einer Vorrichtung 10 für eine Palette 12 zur Lagerung zylinderförmiger Güter auf dieser Palette 12 beschrieben. Dabei beziehen sich gleiche Bezugszahlen auf gleiche technische Merkmale, sofern nichts anderes ausgesagt ist.

Bei einer in Figur 1 in teilweise geschnittenem Querschnitt dargestellten Vorrichtung 10 handelt es sich um ein Ausführungsbeispiel, bei dem ein langgestreckter Körper 14 einen trapezförmigen Querschnitt aufweist. Es ist aber offensichtlich, daß der Körper 14 auch eine dreieckförmige Querschnittsgestalt haben kann. Aus Gewichtsersparnisgründen ist der Körper 14 als Hohlprofil ausgebildet mit einem trapezförmigen Außenrand, bei dem die zueinander parallelen Seiten über einen Steg zur Sicherstellung der Lastaufnahme miteinander verbunden sind.

An einer der zueinander schräg verlaufenden Seiten des trapezförmigen Querschnitts sind zwei Vorsprünge 16 in diesem Falle angeschweißt. Die Vorsprünge 16 sind L-förmig ausgebildet. Dabei sind die jeweiligen langen Schenkel 20 an dem Körper 14 an der oben bezeichneten Seite derart angeschweißt, daß sie mit ihrer Längserstreckung quer zur Längsachse des Körpers 14 verlaufen. Die kurzen Schenkel 22 des L-förmigen Vorsprungs 16 sind dabei derart einander entgegengesetzt orientiert, daß die Stirnseiten der kurzen Schenkel 22 im eingebauten Zustand zu den jeweiligen Querbalken 18 der Palette 12 weisen. Die Querbalken 18 sind dabei einander benachbart, so daß die beiden Vorsprünge 16 in diesen Zwischenraum zwischen diesen beiden Querbalken 18 angeordnet sind.

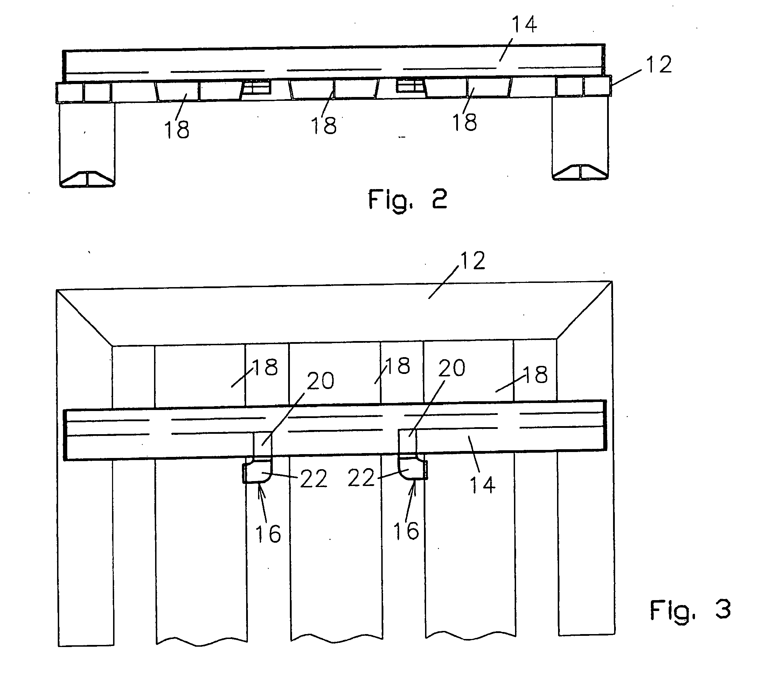

Damit die Bodenunterseiten bzw. -flächen frei von beispielsweise ein Einführen von Gabelstaplerzinken behindernden Bauteilen ist, sind die Vorsprünge 16, wie insbesondere in Figur 2 gezeigt, so angeordnet und dimensioniert, daß sie im eingebauten Zustand oder Betriebszustand höchstens mit dieser Bodenunterfläche fluchten.

In den Figuren sind in diesem Falle Paletten 12 dargestellt, deren Querbalken 18 zum Typ des sogenannten Doppelslope-Profils sind. Das heißt, diese Querbalken 18 weisen eine im wesentliche trapezförmige Querschnittsform auf, bei der die größere parallele Seite den Boden der Palette 12 bilden, auf dem die zu transportierenden Güter aufgesetzt werden.

Damit insbesondere bei diesen Paletten 12 eine besonders feste und einfache Verbindung sichergestellt werden kann, sind die Stirnseiten der kurzen Seiten 22 so abgeschrägt, daß sie mit den entsprechenden Schrägen der Querbalken 18 in einen klemmenden Kontakt bringbar sind. Durch diese doppelseitige, konische Verspannung ist es der Vorrichtung 10 nicht mehr möglich, sich auf der Palette 12 zu verschieben. Wird nun eine zweite Vorrichtung 10 der ersten Vorrichtung 10 gegenüber montiert, also auf gleiche Art und Weise im klemmenden Kontakt gebracht, wobei die längeren parallelen Seiten des trapezförmigen Querschnitts des Körpers 14 einen im wesentlichen V-förmigen Aufnahmebereich bilden, so kann die Palette 12 mit den beiden blockierten Vorrichtungen 10 zum Transport von Coils oder Rollen verwendet werden. Sowohl die Vorrichtung 10 als auch die Palette 12 können aus Metall, Kunststoff oder Holz oder einer beliebigen Kombination daraus bestehen.

Anhand der Figuren 2 bis 6 werden nunmehr Ausführungsbeispiele für ein Anbringen und Verschieben der Vorrichtung 10 auf der Palette 12 beschrieben.

In den Figuren 2 und 3 ist eine sogenannte Transportposition der Vorrichtung 10 auf der Palette 12 gezeigt.

Dabei nimmt die Vorrichtung 10 die in Figur 1 gezeigte Position an, wobei diejenige Seite des trapezförmigen Querschnitts des Körpers 14, an der die Vorsprünge 16 angebracht sind, mehrere Querbalken 18 überstreicht und diese auch berührt. Dabei ist die Länge des Körpers 14 beliebig, so lange sie mindestens zwei Querbalken 18 überstreichen kann. Die Länge richtet sich selbstverständlich nach den Abmessungen des zu transportierenden zylinderförmigen Gutes bzw. der Palette 12.

Insbesondere aus Figur 2 ist entnehmbar, wie der doppelseitige, konische Verspannungszustand zwischen der Stirnseite des kurzen Schenkels 22 und einer schrägen Fläche des trapezförmigen Querbalkens 18 sichergestellt ist. Dabei ist eindeutig entnehmbar, daß in diesem Einbauzustand die Vorrichtung 10 nicht mehr von der Palette 12 nach oben weggezogen werden kann, da die beiden konischen Flächen eine derartige Bewegung nicht zulassen.

Wenn die Abmessungen und insbesondere die Positionen der Vorsprünge 16 bezüglich der Querbalken 18 so gewählt ist, daß bei der Einbringung der Vorrichtung 10 auf der bzw. in der Palette 12 ein klemmender Kontakt zwischen den Vorsprüngen 16 und dem Querbalken 18 entsteht, ist auch ein seitliches Verschieben nicht mehr mit zumindest geringem Kraftaufwand möglich.

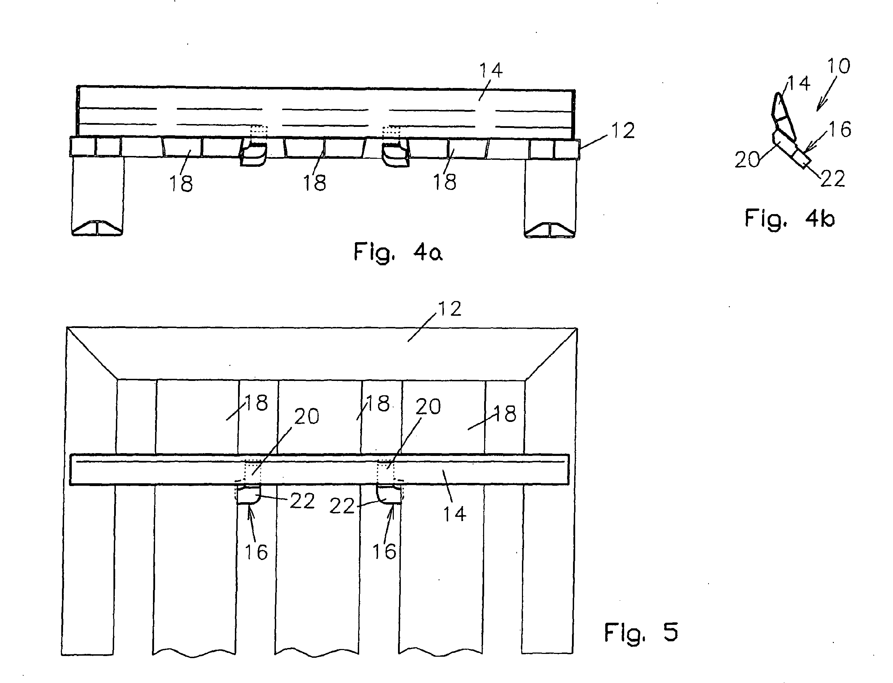

Soll nun die Vorrichtung 10 bezüglich der Palette 12 in eine andere Position verfahren werden, so ist dies durch einfaches Hochkippen des Körpers 14 möglich. Dies ist in den Figuren 4a,b sowie 5 verdeutlicht. Durch das einfache Hochkippen bewegen sich die Stirnseiten der kurzen Schenkel 22 aus einem Eingriff mit den Querbalken 18 heraus, so daß die gesamte Vorrichtung 10 einfach parallel verschoben werden kann. Sobald die Vorrichtung 10 die gewünschte Position erreicht hat, wird sie durch einfaches Abkippen entgegengesetzt der Lösebewegung wieder fixiert.

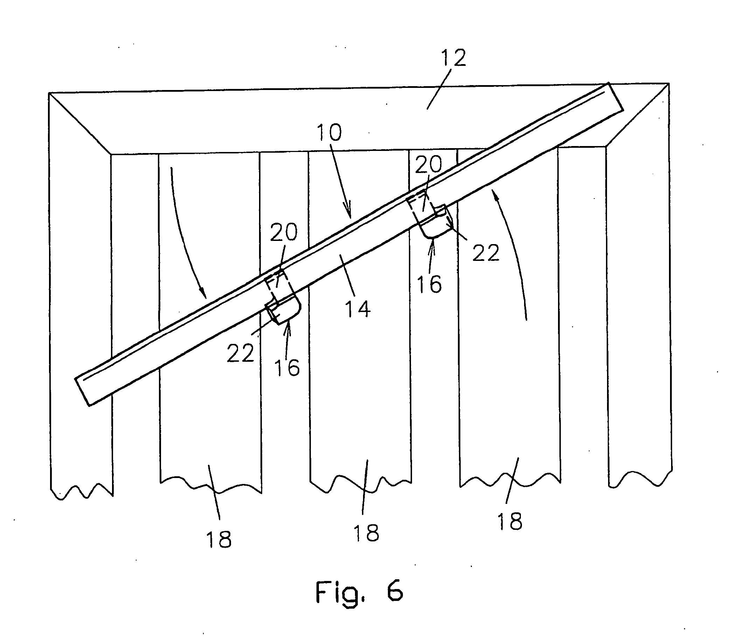

In Figur 6 ist dargestellt, auf welche einfache Art und Weise die Vorrichtung 10 an der Palette 12 angebracht werden kann. Dazu wird die Vorrichtung 10 bezüglich der Querbalken 18 derart verschoben, daß die Längserstreckung des Körpers 14 schräg zur Längsrichtung der Querbalken 18 verläuft. Dadurch können die beiden Vorsprünge 16 in entsprechende Zwischenräume zwischen den Querbalken 18 einfach eingebracht werden.

In Figur 6 ist durch die gezeigten Pfeile das Lösen der Vorrichtung 10 dargestellt. Dieses Lösen erfolgt vorteilhafterweise am besten dann, wenn die Vorrichtung 10 die in Figur 4a gezeigte Position inne hat.

Soll nun die Vorrichtung 10 an der Palette 12 angebracht werden, so wird die Vorrichtung 10 in der in Figur 6 gezeigten Position auf die Palette 12 aufgesetzt und in den in Figur 6 gezeigten Pfeilrichtungen entgegengesetzt verschwenkt, bis die in Figur 4a bzw. Figur 5 gezeigte Position erreicht ist. Anschließend wird durch einfaches Abkippen des Körpers 14 die Vorrichtung 10 mit der Palette 12 in einen klemmenden Kontakt gebracht.

Ferner sind für die Vorrichtung 10 und/oder Palette 12 nicht speziell gezeigte Maßnahmen möglich, die diese Vorrichtung 10 und/oder Palette 12 für sogenannte GMP-Bereiche oder Reinräume verwendbar machen.

Erfindungsgemäß ist daher eine einfache, kostengünstige und auch sichere Möglichkeit gegeben, handelsübliche Paletten mit einer Vorrichtung zu versehen, die einen Transport zylinderförmiger Güter auf sichere Art und Weise ermöglicht.

### Bezugszeichenliste

- 10: Vorrichtung
- 12: Palette
- 14: Körper
- 16: Vorsprung
- 18: Querbalken
- 20: langer Schenkel
- 22: kurzer Schenkel

## Patentansprüche

1. Vorrichtung (10) für eine Palette (12) zur Lagerung zylinderförmiger Güter auf der Palette (12) wobei sie einen langgestreckten Körper (14) aufweist, der an einer Seite mindestens zwei Vorsprünge (16) hat, die mit entsprechenden Querbalken (18) der Palette (12) in Kontakt bringbar sind, **dadurch gekennzeichnet, dass** die Vorsprünge (16) mittels einer Dreh- und/oder Schwenkbewegung mit den entsprechenden Querbalken (18) in einen klemmenden Kontakt bringbar sind, und dass die Vorsprünge (16) L-förmig ausgebildet sind, die jeweiligen langen Schenkel (20) an dem Körper (14) mit ihrer Längserstreckung quer zur Längsachse des Körpers (14) verlaufend befestigt sind und dass die kurzen Schenkel (22) einander entgegengesetzt orientiert sind.

2. Vorrichtung (10), nach Anspruch 1, **dadurch gekennzeichnet, dass** der Körper (14) einen dreieckförmigen oder trapezförmigen Querschnitt aufweist.

3. Vorrichtung (10), nach Anspruch 1 oder 2, **dadurch gekennzeichnet, dass** der Körper (14) ein Hohlkörper ist.

4. Vorrichtung (10), nach einem der Ansprüche 1 bis 3, **dadurch gekennzeichnet, dass** die Vorsprünge (16) am Körper (14) angeschweißt sind.

5. Vorrichtung (10), nach einem der Ansprüche 1 bis 4, **dadurch gekennzeichnet, dass** die Stirnseiten der kurzen Schenkel (22) derart abgeschrägt sind, dass sie mit den entsprechenden Schrägen der Querbalken (18) mit trapez förmigen Querschnitt nach Art des sogenannten Doppelslope-Profils in Kontakt bringbar sind.

6. Vorrichtung (10), nach einem der Ansprüche 1 bis 5, **dadurch gekennzeichnet, dass** die Vorsprünge (16) derartig angeordnet und dimensioniert sind, dass sie im Betriebszustand mit der Bodenunterfläche höchstens fluchten.

7. Vorrichtung (10), nach einem der Ansprüche 1 bis 6, **dadurch gekennzeichnet, dass** sie aus Metall, Kunststoff oder Holz oder einer beliebigen Kombination daraus besteht.

8. Palette (12) mit mindestens zwei Vorrichtungen (10) nach einem der Ansprüche 1 bis 7.

9. Palette (12) nach Anspruch 8, **dadurch gekennzeichnet, dass** sie aus Metall, Kunststoff oder Holz oder einer beliebigen Kombination daraus besteht.

10. Palette (12) nach Anspruch 8 oder 9, **dadurch gekennzeichnet, dass** die Querbalken (18) einen trapezförmigen Querschnitt nach der Art des sogenannten Doppelslope-Profils aufweisen.

11. Palette (12) nach einem der Ansprüche 8 bis 10, **dadurch gekennzeichnet, dass** die für sogenannte GMP-Bereiche oder Reinräume ausgelegt ist.

## Claims

1. Device (10) for a pallet (12) for positioning cylindrical items on the pallet (12), wherein it has a longitudinally extending body (14) which, on one side, has at least two projections (16) which can be brought into contact with corresponding transverse boards (18) of the pallet (12), **characterised in that** the projections (16) can be brought into clamping contact with the corresponding transverse boards (18) by means of a rotational and/or pivoting movement, and that the projections (16) are formed in an L shape, the respective long limbs (20) are attached to the body (14) with their longitudinal extension extending transverse to the longitudinal axis of the body (14) and that the short limbs (22) are oriented oppositely to each other.

2. Device (10) as claimed in claim 1, **characterised in that** the body (14) has a triangular or trapezoidal cross-section.

3. Device (10) as claimed in claim 1 or 2, **characterised in that** the body (14) is a hollow body.

4. Device (10) as claimed in any one of claims 1 to 3, **characterised in that** the projections (16) are welded on the body (14).

5. Device (10) as claimed in any one of claims 1 to 4, **characterised in that** the end faces of the short limbs (22) are chamfered in such a way that they can be brought into contact with the corresponding slopes of the transverse boards (18) with a trapezoidal cross-section in the manner of the so-called double slope profile.

6. Device (10) as claimed in any one of claims 1 to 5, **characterised in that** the projections (16) are disposed and dimensioned such that in the operational state they at most lie flush with the base under surface.

7. Device (10) as claimed in any one of claims I to 6, **characterised in that** it consists of metal, synthetic material or wood or any combination thereof.

8. Pallet (12) having at least two devices (10) as claimed in any one of claims 1 to 7.

9. Pallet (12) as claimed in claim 8, **characterised in that** it consists of metal, synthetic material or wood or any combination thereof.

10. Pallet (12) as claimed in claim 8 or 9, **characterised in that** the transverse boards (18) have a trapezoidal cross-section in the manner of the so-called double slope profile.

11. Pallet (12) as claimed in any one of claims 8 to 10, **characterised in that** it is designed for so-called GMP areas or clean rooms.

## Revendications

1. Dispositif (10) pour une palette (12) pour le stockage de produits cylindriques sur la palette (12), comportant un corps de forme allongée (14) qui présente sur un côté au moins deux saillies (16) aptes à être mises en contact avec des traverses correspondantes (18) de ladite palette (12), **caractérisé en ce que** les saillies (16) sont aptes à être mises en contact de serrage avec les traverses correspondantes (18) à l'aide d'un mouvement tournant et/ou pivotant, et **en ce que** les saillies (16) ont une forme en L, les branches longues (20) sont fixées au corps (14), leur extension longitudinale étant perpendiculaire à l'axe longitudinal du corps (14), et **en ce que** les branches courtes (22) sont orientées à l'opposé l'une de l'autre.

2. Dispositif (10) selon la revendication 1,
**caractérisé en ce que** le corps (14) présente une section transversale triangulaire ou trapézoïdale.

3. Dispositif (10) selon la revendication 1 ou 2, **caractérisé en ce que** le corps (14) est un corps creux.

4. Dispositif (10) selon l'une des revendications 1 à 3, **caractérisé en ce que** les saillies (16) sont soudées au corps (14).

5. Dispositif (10) selon l'une des revendications 1 à 4, **caractérisé en ce que** les côtés frontaux des branches courtes (22) sont biseautés de telle sorte qu'ils sont aptes à être mis en contact avec les biseaux correspondants des traverses (18) à section trapézoïdale à la manière de ce qu'on appelle un profilé à double pente.

6. Dispositif (10) selon l'une des revendications 1 à 5, **caractérisé en ce que** les saillies (16) sont disposées et dimensionnées de manière à être au maximum dans l'alignement de la surface inférieure du fond, en fonctionnement.

7. Dispositif (10) selon l'une des revendications 1 à 6, **caractérisé en ce qu'**il se compose de métal, de matière plastique ou de bois ou d'une combinaison quelconque de ceux-ci.

8. Palette (12) avec au moins deux dispositifs (10) selon l'une des revendications 1 à 7.

9. Palette (12) selon la revendication 8,
**caractérisée en ce qu'**elle se compose de métal, de matière plastique ou de bois ou d'une combinaison quelconque de ceux-ci.

10. Palette (12) selon la revendication 8 ou 9,
**caractérisée en ce que** les traverses (18) ont une section transversale trapézoïdale à la manière de ce qu'on appelle un profilé à double pente.

11. Palette (12) selon l'une des revendications 8 à 10, **caractérisé en ce qu'**elle est conçue pour ce qu'on appelle les zones GMP ou les pièces propres.
